# EUROPEAN PATENT APPLICATION

(11) **EP 2 182 457 A1**
(43) Date of publication of application: **05.05.2010**
(21) Application number: 08168105.8
(22) Date of filing: 31.10.2008
(51) Int. Cl.: G06F 21/00

(54) **Dynamic PIN verification for insecure environment**

(71) Applicant: Gemalto SA, 92190 Meudon (FR)
(72) Inventor: Borusik, Ondrej, 150 00, Prague 5 (CZ)
(74) Representative: Wlodarczyk, Lukasz Georges Kazimierz

(57) **Abstract**

The invention relates to a security token (SIM, SC) which stores secret data (PIN) for authenticating a user, and which comprises means for
• generating random data (DATA)
• generating a randomly distorted representation (CAPTCHA) of the random data (DATA), the representation (CAPTCHA) being recognizable by a human being but hard to recognize by a machine,
• sending the representation (CAPTCHA) to a computing device (MP, PC),
• receiving data from the computing device (MP, PC), and
• authenticating the user if the data received matches the secret data (PIN) and the random data (DATA).

The invention also relates to a system comprising the above security device and a computing device, as well as a method for improving the security of the authentication of a user based on the above security device.

## Description

The invention relates to the authentication of a user, especially in environments comprising a computing device (such as a mobile phone) which security is typically quite low, the computing device relying on a security token.

The invention relates more specifically to a security token. A security token is typically an electronic device, which is light and small in order to be easily carried by a user (fits easily in a pocket). It is most often personal. In general, a security token is basic ("basic security token") in that it does not have a source of power (battery etc.) nor a user interface, i.e. in order to interact with the security token a user typically needs to connect the security token (either in contact or in contact-less mode) with a terminal, which provides some power as well as means to input data into the security token and/or to display or otherwise communicate to the user (e.g. with a sound card, an LED, a buzzer, a vibrator, etc.) certain information sent by the security token. More elaborate security tokens may embed a battery, and/or have input/output capabilities such as a small pinpad, or a small LCD.

The most widespread example of basic security token is probably the smart card. Billions of smart cards are used in the world, and allow card holders (people carrying the smart card) to authenticate themselves e.g. to a financial institution (e.g. when making payment with a bank card), to a telecom operator (e.g. when passing phone calls with a GSM phone equipped with a SIM card), or to a government organization (e.g. when authenticating with a healthcare smart card, ID smart card, or electronic passport). Many other types of security tokens exist, for example USB keys, parallel port dongles, OTP tokens (OTP stands for One Time Password), TPMs (trusted platform modules, specified by the Trusted Computing Group, and which typically allow to secure a computing device by verifying in particular that the hardware components are not modified, and that any software it runs has the good version and has been properly signed), etc.

As well known in the art, a smart card can host several applications (C.F. multi applications smart cards). For example, a SIM card may host, in addition to the GSM application, several banking or transport applications. Such applications are often protected by a specific application PIN, since various applications owners (e.g. different banking institutions, transport operators, etc.) do not necessarily wish to share their authentication credentials. In order to launch an application, the subscriber typically needs to authenticate, and may typically do so by entering an STK menu of the mobile phone (as well known in the art STK stands for SIM Toolkit). The user may then launch the application and verify its application specific PIN. This usage of the application (via SIM Toolkit) is generally considered quite secure (although not highly secure, since it involves typing the PIN on the keyboard of a device deemed moderately secure), however, not very user friendly. Certain GSM operators would like to deploy new applications directly on the mobile phones. Such applications, based on the mobile phone, may use the SIM card for miscellaneous security tasks such as data encryption procedures. At first sight such approach would combine a nice user interface (possibly nicer than with STK) and a reasonably high security provided by the SIM. However mobile phones are typically not very secure and hackers could manage to install inside the mobile phone rogue applications, spyware, viruses, or all sorts of malware likely to interfere with the expected behavior of the SIM card applications. Such malware could intercept and store the PIN value entered by the user, and could at a later time authenticate to the banking applications of the SIM card in order to carry out transactions without the legitimate user's consent. It's easier when not relying on STK. In particular, some NFC banking applications have been recently deployed, whereby the SIM card relies on the NFC antenna of the mobile phone to carry out banking transactions with the NFC reader of a POS (Point of Sales) terminal. However, banking institutions involved in such projects, such as VISA or MasterCard have, not yet approved GSM mobile phones as hardware secure enough for PIN verification for such banking transactions.

Similar concerns exist in personal computers environments. Smart cards are commonly used for encryption of internet transactions, digital signature of emails, authentication of users to the personal computer or to remote servers to which the personal computer connects, etc. Smart cards are typically connected to the personal computer via a smart card reader, or sometimes with a mere connector (when the smart card embeds the electronics generally contained in smart card readers, e.g. USB electronics and encapsulation of the smart card protocol over USB). Specific software known as key loggers have been developed in order to intercept all keys pressed by the user on the keyboard of the personal computer. Similarly, there are USB port loggers, screen loggers, etc. which monitor various components of the personal computer. Therefore, when the PIN code of the smart card is typed, it could be recorded by a hacker, which can later on connect to the smart card and invoke its sensitive functions. It is of course possible to use a secure pinpad reader, which gives a high level of security, but it's more expensive. In order to minimize such attacks without imposing a pinpad reader, banks typically recommend that users remove the smart card from the reader whenever a transaction is not being carried out. On the other hand, smart card are more and more powerful (especially with the advent of multi application smart cards and TCP/IP smart cards), and are increasingly being used for multiple tasks, which makes it inconvenient for the user to be constantly inserting and removing the smart card, especially if smart card removal automatically triggers certain events such as logout from certain accounts, or locking of the screen and automatic launch of the screen saver, etc.

The concerns expressed above with two examples of security tokens exist with security tokens in general.

A security token allows the user to authenticate himself to third parties.

The authentication is typically a two step process. In a first step, the user authenticates himself to the security token, and in a second step the security token authenticates itself to the entity to which the user wishes to authenticate with the security token. The two steps can be partially merged if the security token relays information provided by the user to the third party concerned (typically by encrypting it rather than sending it in clear text), in which case it is possible for the security device to delegate the authentication of the user to the third party (and therefore skip part of the first step).

In the first step, in order to trigger the authentication of the user by the security token, the security token typically requires the user to first authenticate himself with secret data, such as a PIN code (typically 4 digits), a password (typically a series of alphanumeric characters), a passphrase (typically a long sentence which is hashed in order to produce a shorter password), or a series of images, concepts, or sounds, which the user can select from a list provided by the security token. The security limiting factor here is that the user has to be able to remember or recognize the secret data in order to prove its knowledge of the secret data to the security device. The secret data cannot be a very long series of bits which is hard to remember, and cannot involve a complex algorithms which an average user would be unable to carry out mentally (e.g. a user, even a mathematician, is not able to encrypt data with a secure cryptographic algorithm mentally and quickly). Therefore, either the secret data is typed directly, or it is somehow altered (e.g. the user picks an image among a series of images which best reflects the concept which he has selected to authenticate himself), but if a hacker is able to spy the communications between the user and the security token, after a while he will most often be able to guess what the secret data is. It is also possible for the user to submit some biometric information (e.g. fingerprint), and the security device can compare it with prestored biometric information in order to check if it matches. However a hacker could intercept the fingerprint as it is sent to the security device, and even if it is encrypted, if the encryption takes place in an untrusted environment, it is supposed that a hacker could be able to retrieve the biometric data.

In the second step, the security token may simply send a binary response (OK/NOK) to inform whether the user authenticated. Such binary response is preferably encrypted in order to avoid tampering. The security token may also send the secret data in encrypted form, if the secret data is shared (which is in general not recommended). Most often, the second step involves a cryptographic algorithm and a cryptographic key securely stored in the security token (e.g. the authenticating entity sends a random number to the security device, which signs it with an RSA key). It can also be based on other types of credentials (e.g. mere username and password, or biometric data, just to name a few), used either alone, or in combination (e.g. PKI plus fingerprint). I.E. the security token may act as a secure repository for the user's fingerprint and send it to the authenticating entity. If the security device and the user both authenticate with a password, the password used by the user to authenticate to the security device and the password used by the security device to authenticate to the authenticating entity can be different. E.G. the password used by the security device to authenticate to the third party can be a long random number which would be hard to remember by a human being.

Most often the first step is weak (e.g. PIN code typed in an insecure environment), and the second step is strong (e.g. PKI authentication with an RSA key securely stored and used in the security device), but the overall security is determined by the weakest link of the chain, i.e. the first step.

It is known in the art that when a server (e.g. email server) wants to make sure that it is not dealing with a machine such as a hacker's computer trying to create fake data (such as a fake email account on a free e-mail provider, in order to send spam for example), it can use a technique known as CAPTCHA. CAPTCHA stands for "Completely Automated Public Turing test to tell Computers and Humans Apart", and is a Carnegie Mellon University trademark. It is a type of challenge-response test used in computing to determine whether or not the user is human. A common type of CAPTCHA requires that the user type the letters of a distorted image, sometimes with the addition of an obscured sequence of letters or digits that appears on the screen.

It is an object of the invention to propose a solution for improving the security of user authentication to a computing device with a security token.

The invention and its advantages will be explained more in details in the following specification referring to the appended drawings, in which figures 1 and 2 represent a first embodiment based on a mobile phone and a SIM card, and figure 3 represent a second embodiment based on a personal computer and a smart card.

According to the invention, a security token (SIM, SC) stores secret data (PIN) for authenticating a user. As seen above, the secret data can be any information which a user is able to remember (e.g. PIN code or password), recognize (e.g. concept in an image or sound), or otherwise submit (e.g. biometrics).

The security token SIM/SC comprises means for generating random data (DATA) or randomly selecting prestored data (DATA), which will be considered in the sequel as equivalent to randomly generating data (for the sake of simplicity). Such data is preferably a series of ASCII characters, but it could also be any information which a human being is able to recognize and input or select on a computing device, such as pictures of well known people (e.g. a US president, famous actors, etc.), or well known places / monuments (e.g. Eiffel tower), which the user could identify for example by typing the name of the person or object concerned, or by pronouncing the name in a microphone.

The security token SIM/SC comprises means for generating a randomly distorted representation, such as an image (CAPTCHA), of the random data (DATA), the representation (e.g. image CAPTCHA) being recognizable by a human being but hard to recognize by a machine. For example, if the data (DATA) generated consisted in picking a celebrity at random, it is possible to store at least one picture of each celebrity, and to apply digital signal processing techniques on one of the pictures in order to modify the picture randomly without altering its cognitive contents (i.e. it is still possible to recognize the person, but for example the image is rotated, zoomed and darker, etc.). The security token can generate elements different from images, for example it could generate an MP3 file, containing a distorted sentence which characteristics are such (e.g. bad quality with lots of noises and echoes) that the sentence is very hard to be identify by a speech recognition software, while a human being can still understand the sentence easily.

The security token SIM/SC comprises means for sending the representation (image, sound file, etc.) to a computing device (MP, PC). Computing devices considered in this context could be for example personal computers (desktops or laptops), servers (Internet servers, mail servers, routers, etc.), PDAs (personal digital assistants), cellular phones, or MID. MIDs are mobile Internet devices, such as the "M! PC Pocket" developed by Compal Electronics and Intel, which focuses on e-mail and web browsing, or the "Archos 3G+" developed by Archos, which focuses on TV and video. Both of them have been recently launched by mobile network operators such as SFR in France, they embed a SIM card, but they do not offer any voice services.

The security token SIM/SC comprises means for receiving data from the computing device (MP, PC). Typically, the user can use the user interface of the computing device (e.g. mouse, screen, digital camera, microphone, keyboard, etc.) in order to input data and send it to the security token, which typically has little if no user interface at all. The data the security token (SIM, SC) expects to receive can be a mere concatenation of the secret data (PIN) and the random data (DATA) (in whatever order, and also possibly with formatting bits inserted where necessary). The data the security token (SIM, SC) expects to receive could alternatively comprise pointers to reference data pre-stored in the security token (SIM, SC). For example, let's assume that the randomly distorted representation sent by the security token is a combination of a picture showing many persons and of a sound file (e.g. WAVE file) containing a distorted message stating the identity of one of the persons on the picture. E.G. the person could be the famous CEO of a big software company. The data expected by the security device could then consist of the secret data (e.g. a PIN code) concatenated with the coordinates of the mouse click of the user, or with an identifier of the person (if each person on the picture is associated with an identifier - the identifier being preferably random). The coordinates of the mouse clicks, or an identifier typed on the keyboard, represent a kind of pointer, in that it is not the whole data (e.g. actual picture of the CEO) which is sent, but simply an element which allows the security token to recognize which piece of information was selected by the user and whether it matches the expected predefined rules.

The security token SIM/SC comprises means for authenticating the user if the data received matches the secret data (PIN) and the random data (DATA). The matching may consist of a simple bitwise comparison, e.g. if the secret data is a PIN which is typed as such by the user on the computing device, and if the data to be typed are mere ASCII characters (e.g. if the representation was a CAPTCHA image consisting of a distorted image of the ASCII characters). But the matching may be more complex too. For example, a user may be asked to say what he sees when shown the representation sent by the security device, and many answers may be allowed (e.g. if the representation is a picture of the above CEO, the user may type "Bill" if the first name of the CEO is Bill, or "CEO of company X", etc.). In such case the security device could accept several keywords. Or the user may be asked to say what he sees, and a speech recognition module in the security device would attempt to confirm that the sound file containing the answer of the user corresponds to the expected answer, in which case two consecutive answer would never be identical - as you can't say exactly the same sentence at exactly the same speed and intonation. So obviously the verification cannot be a mere bitwise comparison but involves some more elaborate processing. The fact that two identical sentences are submitted could in such case be identified as a replay attack.

It should be noted that the second piece of information added to the secret data is not normally meant to authenticate the user, but simply to check that the user is a human being currently present and interacting with the computing device, as opposed to a computer virus for example.

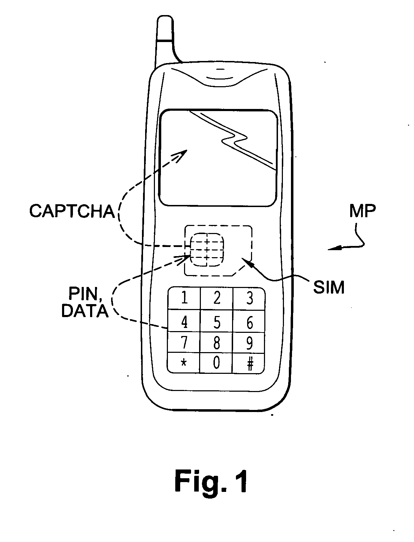

In a preferred embodiment of the invention, the security token is a SIM card (represented on Figure 1) and it is inserted in a mobile phone MP.

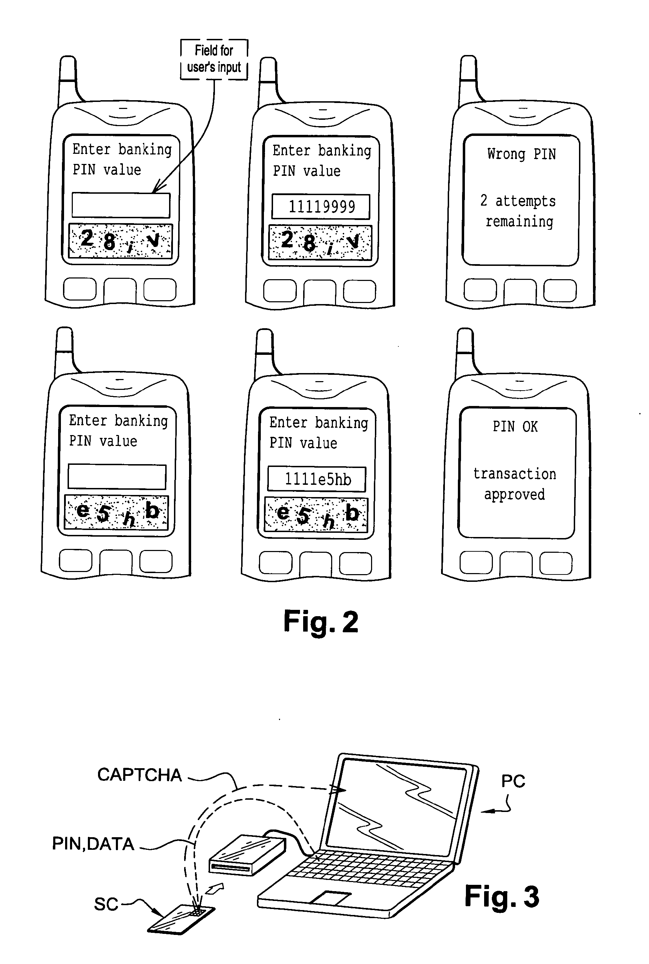

The SIM card hosts a banking application in addition to the GSM application, and the banking application requests authentication with a PIN code. For the sake of simplicity a PIN code value 1111 is used but obviously in real life it is recommended to avoid simple values (e.g. in which all digits identical or are simple series of digits such as 1234). The SIM card sends the CAPTCHA to the mobile phone and instructs the mobile phone to display the CAPTCHA (see dotted arrow from the screen to the display on Figure 1, and screen shots on Figure 2). The SIM card requests the user to type not only the PIN (first part) but also a CAPTCHA. The user therefore needs to type two parts. The first part is a static part (the traditional PIN, known only by the user in principle), and it is followed a dynamic part, which changes after each verification (independently of whether the verification has been successful or not). Each new dynamic PIN value is chosen randomly by the SIM card. The SIM card generates an image and obfuscates the dynamic part of the PIN value in this image (see CAPTCHA on Figure 2). One way for the SIM card to display the CAPTCHA is to host a WEB server. The user can access the SIM card through a WEB browser of the mobile phone. The SIM card can generate a WEB form for the verification of PIN value. At the same time the SIM card can place in the WEB form an image with the obfuscated dynamic part of the PIN value. In the first scenario shown on Figure 2, the user types the proper PIN, but a wrong CAPTCHA (9999 instead of 28iv). So the authentication fails. Then in a second scenario, the user types the right PIN (1111) and the right CAPTCHA (e5hB), and the authentication is successful. In a real implementation, it is recommended not to display the PIN value (and even the CAPTCHA value, although it is less critical, since the CAPTCHA image is visible anyway, by design), in order to avoid over the shoulder spying. The values can be replaced for example by star characters (*).

In an alternative embodiment shown on Figure 3, the security token is a smart card SC, and the computing device is a personal computer PC (a laptop computer in this specific example). It is also possible to use a TPM instead of a smart card. A TPM can be the same type of component as a smart card (it can actually be a smart card), however instead of being linked to the user, it is typically linked to a particular computing device (e.g. it may be inserted or even soldered on the mother board of a computer). The interactions between the smart card SC (or the TPM), the personal computer and the user are the same as in the previous embodiment (the smart card SC corresponding to the SIM card, and the personal computer PC corresponding to the mobile phone).

The invention also relates to a system comprising a security token as described above and a computing device, and to a method for authenticating a user with the above described security token. All variants and improvements described for the security token apply equally to the system and to the method.

## Claims

1. Security token (SIM, SC) storing secret data (PIN) for authenticating a user, the security token (SIM, SC) being **characterized in that** it comprises means for
• generating random data (DATA)
• generating a randomly distorted representation (CAPTCHA) of the random data (DATA), the representation (CAPTCHA) being recognizable by a human being but hard to recognize by a machine,
• sending the representation (CAPTCHA) to a computing device (MP, PC),
• receiving data from the computing device (MP, PC), and
• authenticating the user if the data received matches the secret data (PIN) and the random data (DATA).

2. Security token (SIM, SC) according to claim 1, wherein the data the security token (SIM, SC) expects to receive is a concatenation of the secret data (PIN) and the random data (DATA).

3. Security token (SIM, SC) according to claim 1, wherein the data the security token (SIM, SC) expects to receive comprise pointers to reference data pre-stored in the security token (SIM, SC).

4. Security token (SIM, SC) according to any previous claim, wherein the random data (DATA) consists of ASCII characters.

5. System comprising a computing device (MP, PC) and a security token (SIM, SC), the security token (SIM, SC) storing secret data (PIN) for authenticating a user, the system being **characterized in that** the security token (SIM, SC) comprises means for
• generating random data (DATA)
• generating a randomly distorted representation (CAPTCHA) of the random data (DATA), the representation (CAPTCHA) being recognizable by a human being but hard to recognize by a machine,
• sending the representation (CAPTCHA) to the computing device (MP, PC),
• receiving data from the computing device (MP, PC), and
• authenticating the user if the data received matches the secret data (PIN) and the random data (DATA).

6. System according to claim 5, wherein the security token is a SIM card (SIM) and the computing device is a mobile phone (MP)

7. System according to claim 5, wherein the security token is a smart card (SC) or a TPM, and the computing device is a personal computer (PC).

8. Method for improving the security of the authentication of a user based on a security token (SIM, SC), the security token (SIM, SC) storing secret data (PIN) for authenticating a user, the method being **characterized in that** it comprises the steps of
• generating random data (DATA) in the security token (SIM, SC)
• generating, in the security token (SIM, SC), a randomly distorted representation (CAPTCHA) of the random data (DATA), the representation (CAPTCHA) being recognizable by a human being but hard to recognize by a machine,
• sending the representation (CAPTCHA) from the security token (SIM, SC) to a computing device (MP, PC),
• receiving data from the computing device (MP, PC), by the security token (SIM, SC), and
• authenticating the user if the security token (SIM, SC) determines that data received from the computing device (MP, PC) matches the secret data (PIN) and the random data (DATA).
